# EUROPÄISCHE PATENTSCHRIFT

(11) **EP 2 222 727 B1**
(45) Veröffentlichungstag und Bekanntmachung des Hinweises auf die Patenterteilung: **16.03.2011**
(21) Anmeldenummer: 08852984.7
(22) Anmeldetag: 10.11.2008
(51) Int. Cl.: C08F 18/04, C08F 20/10, C08J 3/02

(54) **HERSTELLUNG VON LÖSUNGEN VON VINYLPOLYMEREN IN REAKTIVEN MONOMEREN**
PRODUCTION OF SOLUTIONS OF VINYL POLYMERS IN REACTIVE MONOMERS
PRÉPARATION DE SOLUTIONS À BASE DE POLYMÈRES VINYLIQUES DANS DES MONOMÈRES RÉACTIFS

(30) Priorität: 21.11.2007 DE 102007047837
(43) Veröffentlichungstag der Anmeldung: 01.09.2010
(73) Patentinhaber: Wacker Chemie AG, 81737 München (DE)
(72) Erfinder: KÖHLER, Thomas, 84556 Kastl (DE)
(74) Vertreter: Schuderer, Michael
(86) Internationale Anmeldenummer: PCT/EP2008/065194
(87) Internationale Veröffentlichungsnummer: WO 2009/065749

(56) Entgegenhaltungen:
- EP-A- 0 274 273
- EP-A- 0 926 188
- WO-A-2007/104639
- US-A1- 2006 173 142

## Beschreibung

Die Erfindung betrifft Verfahren zur Herstellung von Lösungen von Vinylpolymeren in reaktiven Monomeren

Vinylpolymere sind erhältlich durch radikalisch initiierte Polymerisation von ethylenisch ungesättigten Monomeren und liegen bei Raumtemperatur meist in fester Form vor. In vielen Anwendungen werden Vinylpolymere aber in Form von Lösungen in flüssigen, polymerisierbaren Monomeren (reaktive Monomere), wie beispielsweise Styrol, benötigt. Feste Vinylpolymere müssen folglich erst in die eigentliche Anwendungsform gebracht werden, was beispielsweise durch Lösen in reaktiven Monomeren erfolgen kann, wie beispielsweise in der DE-A 102006012200 oder der DE-A 102006019686 beschrieben. Zum Lösen werden feste Vinylpolymere üblicherweise in Pulverform oder als Granulat zu den reaktiven Monomeren dosiert. Das Lösen stellt somit einen separaten, aufwändigen Arbeitsschritt dar, für den entsprechendes Equipment erforderlich ist. Zudem müssen zur Vermeidung von Staubexplosionen Vorsichtsmaßnahmen getroffen werden.

Alternativ können feste Vinylpolymere auch aufgeschmolzen und im schmelzflüssigen Zustand zu den reaktiven Monomeren dosiert werden. Auch diese Vorgehensweise ist apparativ aufwändig, da es eines entsprechenden Equipments bedarf, wie beispielsweise einer Schmelzeinheit und eines Lösebehälters. Auch ist dafür Sorge zu tragen, dass sich die reaktiven Monomere beim Eintrag der Polymerschmelze nicht so sehr erwärmt, dass eine thermisch initiierte Polymerisation auftritt, was sicherheitstechnisch massive Gefahren birgt und zudem dazu führen kann, dass der gesamte Ansatz als Abfall zu entsorgen ist.

Besondere Probleme bereitet die Herstellung entsprechender Lösungen von Vinylpolymeren mit niedrigen Glasübergangstemperaturen Tg (z.B. Tg ≤ 35°C). Denn Vinylpolymere mit niedrigen Glasübergangstemperaturen Tg neigen bei Raumtemperatur zum Verbacken oder Verkleben und können nur durch Kühlung oder Zusatz von Antiblockmitteln in Pulver- oder Granulatform gehalten werden. Vinylpolymere mit niedrigen Glasübergangstemperaturen Tg sind deswegen am Markt im Allgemeinen in Form von Blöcken (z.B. in Blöcken zu 25 kg) verfügbar. Die Herstellung von Lösungen durch Auflösen solcher Blöcke ist aber auf Grund der kleinen Oberfläche der Blöcke im Vergleich zu entsprechenden Pulvern oder Granulaten zeitaufwändig und erfordert Löse-Equipment mit großen Ausmaßen und hoher mechanischer Stabilität. Eine Zerkleinerung der Blöcke ist wegen der Zähigkeit von Vinylpolymeren mit niedrigen Glasübergangstemperaturen Tg in der Praxis schwierig. Beim Aufschmelzen von Vinylpolymeren mit niedrigen Glasübergangstemperaturen Tg und Dosieren der heißen Schmelze zum reaktiven Monomer kommen die oben geschilderten Probleme ebenso zum Tragen. Der Einsatz von Vinylpolymeren in Form von Blöcken ist also hinsichtlich der Ansatzgröße nicht flexibel und mit erheblichen präparativen Problemen verbunden.

Es bestand daher die Aufgabe, Verfahren zur Herstellung von Lösungen von Vinylpolymeren in reaktiven Monomeren bereitzustellen, welche die oben beschriebenen Nachteile nicht aufweisen.

Gegenstand der Erfindung sind Verfahren zur Herstellung von Lösungen von Vinylpolymeren in reaktiven Monomeren durch
a) radikalisch initiierte Polymerisation nach Masse-, Suspensions- oder Lösungspolymerisationsverfahren von einem oder mehreren ethylenisch ungesättigten Monomeren ausgewählt aus der Gruppe umfassend Vinylester, Acrylsäureester und Methacrylsäureester, und gegebenenfalls einem oder mehreren weiteren ethylenisch ungesättigten Monomeren, und anschließend
b) gegebenenfalls Abdestillieren von flüchtigen Bestandteilen und
c) gegebenenfalls Zugabe von einem oder mehreren inerten Lösemitteln,
d) Mischen mit einem oder mehreren reaktiven Monomeren, und
e) Abdestillieren der inerten Lösemittel, dadurch gekennzeichnet, dass die Vinylpolymere in sämtlichen Verfahrensschritten, d.h. vor und während des Mischens mit den reaktiven Monomeren in einer fließfähigen Form vorliegen.

Wesentlich ist, dass die Vinylpolymere in keinem der Verfahrensschritte a) bis e), d.h. weder vor noch während des Mischens mit den reaktiven Monomeren zwischenzeitlich als Feststoff isoliert werden, was erfindungsgemäß bedeutet, dass die Vinylpolymere in sämtlichen Verfahrensschritten, d.h. vor und während des Mischens mit den reaktiven Monomeren in einer fließfähigen Form vorliegen.

Die Vinylpolymere in einer fließfähigen Form haben Viskositäten von vorzugsweise ≤ 10.000.000 Pa·s, besonders bevorzugt von ≤ 5.000.000 Pa·s und am meisten bevorzugt von ≤ 1.000.000 Pa·s (Bestimmung mit dem Bohlin Rheometer CVO 120 HR bei der jeweiligen Temperatur im jeweiligen Verfahrensschritt).

Die Vinylpolymere werden gegebenenfalls durch Erwärmen und/oder durch Zusatz von einem inerten Lösemittel oder einem Gemisch von inerten Lösemitteln in einer fließfähigen Form gehalten.

Zur Herstellung der Vinylpolymere durch Polymerisation werden bevorzugt ein oder mehrere Vinylester von unverzweigten oder verzweigten Carbonsäuren mit 1 bis 18 C-Atomen eingesetzt. Besonders bevorzugte Vinylester sind Vinylacetat, Vinylpropionat, Vinylbutyrat, Vinyl-2-ethylhexanoat, Vinyllaurat und Vinylester von α-verzweigten Monocarbonsäuren mit 5 bis 13 C-Atomen, beispielsweise Vinylpivalat, VeoVa9^{R} oder VeoVa10^{R} (Handelsnamen der Firma Hexion). Am meisten bevorzugt ist Vinylacetat.

Bevorzugte Acrylsäureester und Methacrylsäureester sind Acrylsäureester und Methacrylsäureester von unverzweigten oder verzweigten Alkoholen mit 1 bis 15 C-Atomen. Beispiele für bevorzugte Acrylsäureester oder Methacrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat, Isobornylacrylat, Stearylacrylat. Besonders bevorzugt sind Methylacrylat, Methylmethacrylat, n-, iso- und t-Butylacrylat, 2-Ethylhexylacrylat und Isobornylacrylat.

Als weitere ethylenisch ungesättigte Monomere können ein oder mehrere Monomere ausgewählt aus der Gruppe umfassend Vinylaromaten, Olefine, Diene und Vinylhalogenide eingesetzt werden. Der Anteil der zuletzt genannten Gruppe ethylenisch ungesättigter Monomere an den Vinylpolymeren beträgt vorzugsweise 0 bis 60 Gew.-%, besonders bevorzugt 10 bis 50 Gew.-% und am meisten bevorzugt 20 bis 40 Gew.-%, jeweils bezogen auf das Gesamtgewicht der Monomere zur Herstellung der Vinylpolymere.

Bevorzugte Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Weitere geeignete ethylenisch ungesättigte Monomere sind auch ethylenisch ungesättigte Monomere mit funktionellen Gruppen, wie beispielsweise Epoxygruppen, Carbonsäuregruppen, Sulfonsäuregruppen oder Phosponsäuregruppen. Bevorzugt sind hierbei ethylenisch ungesättigte Epoxide, Mono- und Dicarbonsäuren, Sulfonate und Phosphonate mit 1 bis 20 C-Atomen, besonders bevorzugt 1 bis 10 C-Atomen, die linear oder verzweigt, offenkettig oder cyclisch angeordnet sein können. Am meisten bevorzugt sind hierbei ethylenisch ungesättigte Epoxide und ethylenisch ungesättigte Mono- und Dicarbonsäuren.

Beispiele für bevorzugte ethylenisch ungesättigte Epoxide sind Glycidylacrylat, Glycidylmethacrylat (GMA) oder Allylglycidylether. Besonders bevorzugt sind Glycidylacrylat und Glycidylmethacrylat, insbesondere Glycidylmethacrylat.

Beispiele für bevorzugte ethylenisch ungesättigte Carbonsäuren sind Acrylsäure, Methacrylsäure, Crotonsäure und Fumarsäure. Ein Beispiel für ein bevorzugtes ethylenisch ungesättigtes Sulfonat ist Vinylsulfonat. Ein Beispiel für ein bevorzugtes ethylenisch ungesättigtes Phosphonat ist Vinylphosphonat.

Die ethylenisch ungesättigten Monomere mit funktionellen Gruppen werden im Allgemeinen zu einem Anteil von 0 bis 20 Gew.-% eingesetzt, bevorzugt zu einem Anteil von 0,1 Gew.-% bis 15 Gew.-%, besonders bevorzugt zu einem Anteil von 0,1 Gew.-% bis 10 Gew.-% und am meisten bevorzugt zu einem Anteil 0,5 bis 5 Gew.-%, jeweils bezogen auf das Gesamtgewicht der Monomere zu Herstellung der Vinylpolymere.

Beispiele für geeignete Vinylpolymere sind Homopolymerisate von Vinylestern und Mischpolymerisate von mehreren Vinylestern und Mischpolymerisate von einem oder mehreren Vinylestern und einem oder mehreren ethylenisch ungesättigten Monomeren. Bevorzugt werden Vinylpolymere auf der Basis von Vinylacetat und gegebenenfalls einem oder mehreren weiteren Monomeren ausgewählt aus der Gruppe umfassend Vinyllaurat, Butylacrylat, Glycidylmethacrylat, Acrylsäure, Crotonsäure und Ethen.

Beispiele für geeignete Homo- und Mischvinylpolymerisate sind Vinylacetat-Homopolymerisate, Mischpolymerisate von Vinylacetat und Ethen, Mischpolymerisate von Vinylacetat mit einem oder mehreren weiteren Vinylestern und gegebenenfalls Ethen, Mischpolymerisate von Vinylacetat und einem oder mehreren Acrylsäureestern und gegebenenfalls Ethen, Mischpolymerisate von Vinylacetat mit einem oder mehreren ethylenisch ungesättigten Carbonsäuren und gegebenenfalls Ethen, Mischpolymerisate von Vinylacetat mit einem oder mehreren weiteren Vinylestern und einem oder mehreren ethylenisch ungesättigten Carbonsäuren und gegebenenfalls Ethen, Mischpolymerisate von Vinylacetat mit einem oder mehreren weiteren Vinylestern und einem oder mehreren Acrylsäureestern und gegebenenfalls Ethen.

Bevorzugt werden Vinylacetat-Homopolymerisate; Mischpolymerisate von Vinylacetat mit 1 bis 50 Gew.-% von einem oder mehreren Vinylestern mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, Veo-Va11^{R}; Mischpolymerisate von Vinylacetat und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; Mischpolymerisate von Vinylacetat und 0,1 bis 10 Gew.-% ethylenisch ungesättigte Monomere mit Carbonsäuregruppen und 1 bis 15 C-Atomen, insbesondere Acrylsäure, Methacrylsäure, Crotonsäure und Fumarsäure; bevorzugt werden auch Mischpolymerisate mit 30 bis 75 Gew.-% Vinylacetat, 1 bis 45 Gew.-% Vinyllaurat oder Vinylester einer alpha-verzweigten Carbonsäure mit 5 bis 13 C-Atomen sowie 0,1 bis 10 Gew.-% ethylenisch ungesättigter Monomere mit Carbonsäuregruppen und 1 bis 15 C-Atomen, insbesondere Acrylsäure, Methacrylsäure, Fumarsäure und Crotonsäure; Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, sowie 0,1 bis 10 Gew.-% ethylenisch ungesättigte Monomere mit Carbonsäuregruppen, insbesondere Acrylsäure, Methacrylsäure, Crotonsäure und Fumarsäure, und 1 bis 15 C-Atomen, 1 bis 45 Gew.-% Acrylsäureester von unverzweigten oder verzweigten Alkoholen mit 1 bis 15 C-Atomen, insbesondere n-Butylacrylat oder 2-Ethylhexylacrylat; wobei sich die Angaben in Gew.-% auf jeweils 100 Gew.-% aufaddieren.

Als reaktive Monomere sind dieselben Monomere geeignet, bevorzugt bzw. besonders bevorzugt, die auch für die Polymerisation zur Herstellung der Vinylpolymere geeignet, bevorzugt bzw. besonders bevorzugt sind. Ganz besonders bevorzugte reaktive Monomere sind Styrol, Methylmethacrylat, Methylacrylat und Butylacrylat. Das am meisten bevorzugte reaktive Monomer ist Styrol.

Als reaktive Monomere sind auch mehrfachfunktionelle ethylenisch ungesättigte Monomere geeignet. Die mehrfachfunktionellen ethylenisch ungesättigten Monomere umfassen Acrylatderivate, die üblicherweise in UV-vernetzenden Systemen eingesetzt werden. Beispiele für mehrfachfunktionelle ethylenisch ungesättigte Monomere sind (Meth)acrylsäureanhydrid, Allyl(meth)acrylat, Ethylenglykoldi(meth)acrylat, Diethylengly-koldi(meth)acrylat, Triethylenglykoldi(meth)acrylat, Tetraethylenglykoldi(meth)acrylat, Polyethylenglykol 400-di(meth)acrylat, 1,3-Butandioldi(meth)acrylat, 1,4-Butandioldi(meth)acrylat, 1,6-Hexandioldi(meth)acrylat, 1,12-Dodecandioldi(meth)acrylat, Glycerin-1,3-di(meth)acrylat, Diurethandi(meth)acrylat oder Trimethyolpropantri(meth)-acrylat.

Die Herstellung der Vinylpolymere erfolgt nach dem Masse-, Suspensions- oder vorzugsweise nach dem Lösungspolymerisationsverfahren. Die Vinylpolymere können auch erhalten werden, indem die mittels der genannten Polymerisationsverfahren erhaltenen Polymerisate einer oder mehreren polymeranalogen Umsetzungen unterzogen werden, wie sie dem Fachmann beispielsweise aus der EP-A 0506703 bekannt sind.

Geeignete Lösemittel oder geeignete Komponenten für Gemische von inerten Lösemitteln sind beispielsweise Alkohole, Ketone, Ester, Ether, aliphatische oder aromatische Kohlenwasserstoffe. Bevorzugte Lösemittel sind einwertige, aliphatische Alkohole mit 1 bis 6 C-Atomen, wie Methanol, Ethanol, Propanol oder Isopropanol; Ketone wie Aceton, Methylethylketon, Methylisobutylketon; Ester wie Methylacetat, Ethylacetat, Propylacetat, Butylacetat; Ether wie Dimethylether, Diethylether, Methylethylether, Methylisobutylether, Aromaten wie Benzol oder Toluol; Aliphaten wie Pentan, Hexan, Heptan oder deren Gemische. Besonders bevorzugt sind Methanol, Ethanol, Isopropanol, Aceton, Methylethylketon, Methylacetat und Ethylacetat.

Die Reaktionstemperatur für die Polymerisation beträgt vorzugsweise 40°C bis 180°C. Im Allgemeinen wird unter Rückfluss polymerisiert. Vorzugsweise wird die Siedekühlung zur Abführung der Reaktionswärme genutzt. Die Polymerisation kann bei Normaldruck oder unter Überdruck erfolgen.

Als Initiatoren können beispielsweise organische Peroxide oder Azoverbindungen verwendet werden. Beispiele für geeignete Initiatoren sind Diacylperoxide wie Dilauroylperoxid, Peroxoester wie t-Butylperoxopivalat oder t-Butylperoxo-2-ethylhexanoat, oder Peroxodicarbonate wie Diethylperoxodicarbonat. Die Initiatormenge beträgt im Allgemeinen von 0,01 bis 5,0 Gew.-%, bezogen auf das Gesamtgewicht der Monomere. Die Initiatoren können sowohl vorgelegt als auch dosiert werden. Dabei hat es sich bewährt, einen Teil der benötigten Initiatormenge vorzulegen und den Rest kontinuierlich während der Reaktion zu dosieren.

Zur Herstellung der Polymerisate kann nach einem Batchverfahren gearbeitet werden, wobei alle Komponenten des Polymerisationsansatzes im Reaktor vorgelegt werden, oder nach einem Semi-Batchverfahren, wobei einzelne oder mehrere Komponenten vorgelegt werden und der Rest zudosiert wird, oder eine kontinuierliche Polymerisation durchgeführt werden, wobei die Komponenten während der Polymerisation zudosiert werden. Die Dosierungen können gegebenenfalls separat (räumlich und zeitlich) durchgeführt werden.

Die Einstellung des Molekulargewichts kann in bekannter Weise durch Zugabe von Regler, durch den Lösemittelgehalt, durch Variation der Initiatorkonzentration und durch Variation der Temperatur erfolgen. Geeignete Regler sind beispielsweise Alkohole wie Methanol, Ethanol oder Isopropanol, Aldehyde wie Acetaldehyd, Propionaldehyd oder Butyraldehyd, schwefelhaltige Regler wie Thiole, Thiosäuren und -ester, Mercaptosilane, beispielsweise Ethylmercaptan, Dodecylmercaptan, Thioessigsäure, Mercaptopropionsäure und 3-Mercaptopropyltrimethoxysilan.

Im Anschluss an die Herstellung der Vinylpolymere nach den oben beschriebenen Verfahren werden die Vinylpolymere in die erfindungsgemäßen Lösungen überführt. Vorzugsweise erfolgt das Mischen der Vinylpolymere mit den reaktiven Monomeren direkt im Anschluss an die Herstellung der Vinylpolymere mittels Polymerisation.

Das Mischen der Vinylpolymere mit den reaktiven Monomeren wird vorzugsweise in einem Temperaturbereich (Mischungstemperaturbereich) von 20 bis 140°C durchgeführt, besonders bevorzugt von 20 bis 80°C und am meisten bevorzugt von 40 bis 80°C.

Geeignete bzw. bevorzugte inerte Lösemittel oder geeignete bzw. bevorzugte Komponenten für Gemische von inerten Lösemitteln sind beispielsweise dieselben Lösemittel, die als Lösemittel für die Polymerisation geeignet bzw. bevorzugt sind. Besonders bevorzugte inerte Lösemittel sind Methanol, Ethanol, Isopropanol, Aceton, Methylethylketon, Methylacetat und Ethylacetat.

Vinylpolymere, die bei einer Temperatur innerhalb des Mischungstemperaturbereichs in einer fließfähigen Form vorliegen, können ohne Zusatz von inerten Lösemitteln zum Mischen mit den reaktiven Monomeren eingesetzt werden. Vinylpolymere, die im Mischungstemperaturbereich nicht in einer fließfähigen Form vorliegen, können durch Zusatz von einem inerten Lösemittel oder einem Gemisch von inerten Lösemitteln in eine fließfähige Form gebracht werden. Bei Zusatz von inerten Lösemitteln wird vorzugsweise eine möglichst geringe Menge an inerten Lösemitteln eingesetzt; besonders bevorzugt wird gerade soviel an inerten Lösemitteln eingesetzt, dass die Vinylpolymere bei der jeweiligen Temperatur innerhalb des Mischungstemperaturbereichs in einer fließfähigen Form vorliegen. Der Feststoffgehalt der Vinylpolymere in den inerten Lösemitteln beträgt bevorzugt 30 bis 99 Gew.-%, besonders bevorzugt 50 bis 99 Gew.-%, ganz besonders bevorzugt 60 bis 99 Gew.-% und am meisten bevorzugt 70 bis 95 Gew.-%.

Die reaktiven Monomere können zum Mischen mit den Vinylpolymeren als Lösung in einem oder mehreren inerten Lösemitteln oder in Substanz eingesetzt werden. Vorzugsweise werden die reaktiven Monomere in Substanz eingesetzt.

Wenn die Vinylpolymere nach einem Massepolymerisationsverfahren hergestellt werden und bei der gewünschten Temperatur innerhalb des Mischungstemperaturbereichs in einer fließfähigen Form vorliegen (Variante α)), dann werden die Vinylpolymere vorzugsweise ohne Zusatz von inerten Lösemitteln zum Mischen mit den reaktiven Monomeren eingesetzt. Die nach dem Massepolymerisationsverfahren erhaltenen Vinylpolymere können aber auch durch Zugabe von einem inerten Lösemittel oder einem Gemisch von inerten Lösemitteln bei jeder beliebigen Temperatur innerhalb des Mischungstemperaturbereichs in die gewünschte fließfähige Form gebracht werden (Variante β)), bevor sie mit den reaktiven Monomeren gemischt werden.

Erfolgt die Polymerisation zur Herstellung der Vinylpolymere nach einem Lösungs- oder Suspensionspolymerisationsverfahren in einem Lösemittel oder einem Gemisch von Lösemitteln, die ausschließlich inerte Lösemittel sind, und liegen die Vinylpolymere darin bei einer Temperatur innerhalb des Mischungsbereichs in einer fließfähigen Form vor (Variante γ)), so kann das Mischen mit den reaktiven Monomeren direkt im Anschluss an die Polymerisation erfolgen. Vorzugsweise wird bei Variante γ) aber das gesamte oder ein Teil des nach der Polymerisation vorhandenen Lösemittels mittels Destillation unter atmosphärischem Druck oder reduziertem Druck, vorzugsweise bei Drücken von ≤ 100 mbar, entfernt, wobei darauf zu achten ist, dass soviel inertes Lösemittel verbleibt, dass die Vinylpolymere bei der gewünschten Temperatur innerhalb des Mischungstemperaturbereichs in einer fließfähigen Form vorliegen.

Wird die Polymerisation in einem Lösemittel oder einem Gemisch von Lösemitteln durchgeführt, die nicht ausschließlich inerte Lösemittel sind, so werden die Lösemittel zumindest weitgehend oder vorzugsweise vollständig mittels Destillation unter atmosphärischem Druck oder reduziertem Druck, vorzugsweise bei Drücken von ≤ 100 mbar, entfernt und das Mischen der Vinylpolymere mit den reaktiven Monomeren analog zu einer der Varianten α) oder β) durchgeführt.

Das Mischen der Vinylpolymere und der reaktiven Monomere kann unter Einsatz der gängigen, dem Fachmann bekannten Vorrichtungen, wie beispielsweise Reaktoren, Rührkessel oder Mischer, und Rührer, wie beispielsweise Flügel-, Anker- oder Blattrührer, durchgeführt werden. Vorzugsweise wird das Mischen direkt in dem Reaktor durchgeführt, in dem die Polymerisation durchgeführt wurde.

Zum Mischen der Vinylpolymere und der reaktiven Monomere kann nach einem Semi-Batchverfahren gearbeitet werden, bei dem entweder die Vinylpolymere oder die reaktiven Monomere gegebenenfalls in inerten Lösemitteln und gegebenenfalls nach Erwärmen innerhalb des Mischungstemperaturbereichs in der Mischvorrichtung vorgelegt werden und die andere Komponente gegebenenfalls in inerten Lösemitteln und gegebenenfalls nach Erwärmen innerhalb des Mischungstemperaturbereichs zudosiert wird; oder bevorzugt nach einem Semi-Batchverfahren, bei dem Vinylpolymere vorgelegt und die reaktiven Monomere zudosiert werden. Alternativ kann das Mischen der Vinylpolymere und der reaktiven Monomere auch nach einem kontinuierlichen Verfahren durchgeführt werden, wobei die Komponenten gegebenenfalls separat (räumlich und zeitlich) während des Mischens zudosiert werden können.

Sofern die Vinylpolymere und die reaktiven Monomere in Gegenwart von inerten Lösemitteln gemischt wurden, werden die inerten Lösemittel unter atmosphärischem Druck oder reduziertem Druck, vorzugsweise bei Drücken von ≤ 100 mbar abdestilliert, wodurch Lösungen von Vinylpolymeren in reaktiven Monomeren erhalten werden. Die Durchführung der Destillation bei vermindertem Druck ermöglicht das Abdestillieren der inerten Lösemittel bei niedrigeren Temperaturen, was insbesondere bei Einsatz von thermisch instabilen reaktiven Monomeren von Vorteil ist und einer unerwünschten thermisch initiierten Polymerisation entgegenwirkt.

Zur Verringerung des Restgehalts von inerten Lösemitteln an den so erhaltenen Lösungen kann es vorteilhaft sein, weitere Mengen an einem oder mehreren reaktiven Monomeren in Substanz zuzugeben, und anschließend die zugegebenen Mengen an reaktiven Monomeren gemeinsam mit Restmengen an inerten Lösemitteln mittels Destillation, wie oben beschrieben, abzutrennen. Das Abtrennen von Restmengen an inerten Lösemitteln erfolgt vorzugsweise, indem das Zugeben von weiteren Mengen an einem oder mehreren reaktiven Monomeren und das Abdestillieren von inerten Lösemitteln in dieser Reihenfolge insgesamt 1 bis 3 Mal durchgeführt werden.

Alternativ können reaktive Monomere auch kontinuierlich während des Abdestillierens von inerten Lösemitteln zugegeben werden. Bei der kontinuierlichen Vorgehensweise werden die reaktiven Monomere vorzugsweise in dem Maße zugegeben, wie inerte Lösemittel abdestilliert werden.

Auf diese Weise sind Lösungen von Vinylpolymeren in reaktiven Monomeren mit beliebigen oder vorzugsweise niedrigen Gehalten an inerten Lösemitteln zugänglich. Vorzugsweise enthalten die Lösungen von Vinylpolymeren in reaktiven Monomeren ≤ 20 Gew.-%, besonders bevorzugt ≤ 10 Gew.-%, ganz besonders bevorzugt ≤ 1 Gew.-% und am meisten bevorzugt ≤ 0,5 Gew.-% inerte Lösemittel, jeweils bezogen auf das Gesamtgewicht der erfindungsgemäßen Lösungen.

Die abdestillierten Mengen an inerten Lösemitteln und die dabei gegebenenfalls mit abdestillierten reaktiven Monomere können, gegebenenfalls nach Aufreinigung, dem erfindungsgemäßen Verfahren im entsprechenden Verfahrensschritt wieder zugeführt oder anderweitig recycelt werden.

Der Gehalt der Vinylpolymere bzw. der reaktiven Monomere an den erfindungsgemäßen erhaltenen Lösungen kann durch abschließende Zugabe von einem oder mehreren reaktiven Monomeren angepasst werden.

Die erfindungsgemäß erhaltenen Lösungen enthalten vorzugsweise 10 bis 90 Gew.-%, besonders bevorzugt 10 bis 80 Gew.-%, ganz besonders bevorzugt 20 bis 75 Gew.-% und am meisten bevorzugt 30 bis 70 Gew.-% an reaktiven Monomeren, jeweils bezogen auf die Gesamtmasse der Lösungen.

Bevorzugt sind auch Lösungen von Vinylpolymeren in reaktiven Monomeren mit einem Gehalt an Vinylpolymeren von 10 bis 90 Gew.-%, besonders bevorzugt von 20 bis 90 Gew.-%, jeweils bezogen auf das Gesamtgewicht der Lösungen.

Im erfindungsgemäßen Verfahren können Vinylpolymere mit beliebigen Glasübergangstemperaturen Tg eingesetzt werden. Vorteilhafterweise können aber auch Vinylpolymere mit niedrigen Glasübergangstemperaturen problemlos eingesetzt werden, wie beispielsweise Vinylpolymere mit Glasübergangstemperaturen Tg von ≤ 35°C, bevorzugt ≤ 30 °C, besonders bevorzugt von ≤ 20 °C und am meisten bevorzugt von ≤ 10 °C.

Zudem sind nach dem erfindungsgemäßen Verfahren auch Lösungen von Vinylpolymeren in reaktiven Monomeren leicht zugänglich, die unter Erwärmung zu einer thermisch initiierten Polymerisation neigen. Bei Einsatz von thermisch instabilen reaktiven Monomeren kann durch Erhöhung der Menge an inerten Lösemitteln erreicht werden, dass die Vinylpolymere bei Temperaturen in einer fließfähigen Form vorliegen, bei denen keine thermisch initiierte Polymerisation erfolgt. Zum Unterbinden unerwünschter Polymerisationen können in einem oder mehreren Verfahrensschritten nach Abschluss der Polymerisation ein oder mehrere Polymerisations-Inhibitoren zugegeben werden. Polymerisations-Inhibitoren hemmen Polymerisationen ethylenisch ungesättigter Monomere vollständig oder teilweise. Beispiele für geeignete Polymerisations-Inhibitoren sind Hydrochinon, Hydrochinonmonomethylether und 4-tertiär Butylcatechol. Polymerisations-Inhibitoren können beispielsweise zu 10 bis 500 ppm zugesetzt werden, bezogen auf die Gesamtmasse der Lösung von Vinylpolymeren in reaktiven Monomeren.

Die erfindungsgemäß erhältlichen Lösungen sind für sämtliche Anwendungen geeignet, in denen Lösungen von Vinylpolymeren in reaktiven Monomeren zum Einsatz kommen. Die erfindungsgemäß erhältlichen Lösungen können beispielsweise in UV-vernetzenden Systemen oder als Additiv bei der Herstellung von Composite-Bauteilen, wie beispielsweise von Kunststoff-Bauteilen, eingesetzt werden.

Vorzugsweise werden die erfindungsgemäß erhältlichen Lösungen als Low-Profile-Additive (LPA) für die Herstellung von flächigen Kunststoffteilen auf Basis von ungesättigten Polyesterharz-Zusammensetzungen (UP-Harze) eingesetzt. Problematisch bei der Herstellung solcher ungesättigter Polyesterharz-Zusammensetzungen ist der im Zuge der Härtung des Polyesterharzes auftretende Volumenschwund. Um diesem Schrumpf bei der Aushärtung des Polyesterharzes entgegenzuwirken, werden diesem sogenannte LPA zugegeben. Das Low-Profile-Additive reduziert das Schrumpfen beim Aushärten, baut Eigenspannungen ab, verringert Mikrorissbildung und erleichtert die Einhaltung von Fertigungstoleranzen. Die Aushärtung erfolgt vorzugsweise bei Temperaturen von ≥ 130°C.

Für die Anwendung als Low-Profile-Additiv werden die Lösungen von Vinylpolymeren in reaktiven Monomeren, im Allgemeinen in Styrol, und gegebenenfalls zusammen mit weiteren Additiven wie Füllstoffen, Verdickern, Initiatoren und Verarbeitungshilfsmitteln appliziert. Die erfindungsgemäß erhältlichen Lösungen von Vinylpolymeren in reaktiven Monomeren können auch in Kombination mit herkömmlichen Low-Profile-Additiven verwendet werden, beispielsweise in Kombination mit Polyvinylacetat, carboxylfunktionellen Polyvinylacetaten und Polymethylmethacrylat.

Als ungesättigte Polyesterharz-Zusammensetzungen werden üblicherweise Reaktionsprodukte einer Dicarbonsäure oder eines Dicarbonsäureanhydrids mit einem Polyol eingesetzt. Derartige Polyesterharz-Zusammensetzungen enthalten üblicherweise zusätzlich ein oder mehrere Monomere mit ethylenisch ungesättigten Gruppen, im allgemeinen Styrol. Styrol wird der Polyesterharz-Zusammensetzung zugegeben, um den Polyester zu lösen und um sicherzustellen, dass die Polyesterzusammensetzung eine fließfähige Masse ist. Zur Verstärkung der mit der Polyesterharz-Zusammensetzung erhaltenen Kunststoffteile enthalten die Polyesterharz-Zusammensetzungen noch Fasermaterialien wie Glasfaser, Carbonfaser oder entsprechende Fasermatten (Fiber Reinforced Plastic composites = FPR composites).

Die vernetzbaren Vinylester-Copolymerisate können für alle gängigen Herstellungsverfahren von FRP Composites als Low-Profile-Additive eingesetzt werden, wie beispielsweise für Sheet Molding Compound Technology (SMC), Bulk Molding Compound Technology (BMC), Resin Transfer Molding (RTM), Resin Injection Molding (RIM). Bei dem BMC-Verfahren werden die Bestandteile des Compounds, die styrolische Polyesterharz-Lösung, das Low Profile Additive, der Vernetzungskatalysator, Füllstoff, Formtrennmittel sowie gegebenenfalls weitere Zusatzstoffe zu einer pastösen Masse vermischt, danach Glasfaser zugemischt, und anschließend unter Anwendung von Druck und Temperatur das Formteil hergestellt. Beispielsweise werden mit dieser Technik Reflektoren für Autoscheinwerfer hergestellt. Bei dem SMC-Verfahren wird analog dem BMC-Verfahren eine pastöse Masse aus styrolischer Polyesterharz-Lösung, Low-Profile-Additiv, Vernetzungskatalysator, Füllstoff, Formtrennmittel sowie gegebenenfalls weiteren Zusatzstoffen hergestellt, welche auf einen Polyamidfilm aufgetragen wird. Anschließend wird Glasfaser auf diese Schicht aufgestreut, und schließlich eine weitere Schicht der pastösen Masse aufgetragen. Dieses flächige Sandwich wird dann von der Folie abgezogen, in Stücke geschnitten und unter Anwendung von Druck und Temperatur zu Formteilen verpresst. Formteile, welche mittels dieser Technik hergestellt werden, sind beispielsweise Heckklappen von Automobilen.

Die Formulierungen von FRP-Composites für die BMC-Technik (Bulk Molding Compound) und die SMC-Technik sind dem Fachmann bekannt. Eine typische Formulierung enthält 60 bis 70 Gew.-Teile ungesättigtes Polyesterharz (als 50 bis 75 %-ige Lösung in Styrol), 30 bis 40 Gew.-Teile Low-Profile-Additive (als 30 bis 50 %-ige Lösung in Styrol), 0,5 bis 2 Gew.-Teile Initiator wie t-Butylperbenzoat, 150 bis 200 Gew.-Teile Füllstoff wie Calciumcarbonat, 25 bis 30 Gew.-Teile Glasfaser, 0,5 bis 3 Gew.-Teile Formtrennmittel wie Zinkstearat, sowie gegebenenfalls weitere Zusatzstoffe, beispielsweise Pigmente, Verdicker, flammhemmende Zusätze.

Bei Verwendung der Lösungen von Vinylpolymeren in reaktiven Monomeren werden die Vinylpolymere in einer Menge von 10 bis 100 Gew.-%, vorzugsweise 50 bis 100 Gew.-%, jeweils bezogen auf die Gewichtsmenge an Low-Profile-Additiv in der Rezeptur, eingesetzt.

Die nachfolgenden Beispiele dienen zur weiteren Erläuterung der Erfindung, ohne diese in irgendeiner Weise einzuschränken. Herstellung der Lösungen eines Vinylpolymeren in reaktiven Monomeren:

### Beispiel 1:

In einem 31-Glasrührtopf mit Ankerrührer, Rückflusskühler und Dosiereinrichtungen wurden 207,0 g Methanol, 15,0 g Acetaldehyd, 60,0 g Vinylacetat, 40,0 g Vinyllaurat und 0,5 g PPV (t-Butylperpivalat, 75 %-ige Lösung in Aliphaten) vorgelegt. Anschließend wurde die Vorlage bei einer Rührerdrehzahl von 200 UpM unter Stickstoff auf 70°C aufgeheizt. Nach Erreichen der Innentemperatur von 70°C wurde mit der Monomerdosierung begonnen und innerhalb von 240 Minuten wurden 540,0 g Vinylacetat und 360,0 g Vinyllaurat zudosiert. Parallel dosierte man die Initiatorlösung (1,5 g PPV), die jedoch innerhalb von 300 Minuten zudosiert wurde. Nach dem Ende der Initiatordosierungen wurde noch 2 Stunden bei 80°C nachpolymerisiert. Man erhielt eine klare Lösung des Vinylpolymers mit einem Feststoffgehalt von 82 Gew.-%.

Anschließend wurden bei 50°C 300,0 g Styrol zugegeben und bei einem Druck von 10 mbar 250,0 g Destillat abdestilliert. Danach wurde eine zweite Charge Styrol (500,0 g stabilisiert mit 75 ppm TBC "4-tertiär Butylcatechol" bezogen auf Gesamtmasse der 40%igen styrolischen Lösung) zudosiert. Anschließend wurde unter einem Druck von 10 mbar ein Destillat enthaltend Methanol und Styrol abdestilliert. In sämtlichen Verfahrensschritten lagen die Vinylpolymere ausschließlich in Lösungen mit Viskositäten von ≤ 1.000.000 Pa·s vor (bestimmt mit dem Bohlin Rheometer CVO 120 HR bei der jeweiligen Temperatur des jeweiligen Verfahrensschrittes). Durch Zugabe von weiteren 700,0 g Styrol wurde eine styrolische Lösung mit einem Feststoffgehalt von 40 Gew.-% an Vinylpolymeren und einer Viskosität von 3.400 mPa·s erhalten (Bestimmung nach Brookfield bei 20 UpM und 23°C). Die Lösung wies einen Restgehalt an Methanol von 4.290 ppm auf. Das Vinylpolymer zeigte eine Tg von 0°C (bestimmt mittels "differential scanning calorimetry" DSC; Mettler DSC 821 E; Aufheizrate 20°C/min).

### Beispiel 2:

Analog der Vorgehensweise von Beispiel 1 wurde ein Vinylpolymer hergestellt, welches aus 60 Gew.-% Vinylacetat und 40 Gew.-% Vinyllaurat bestand. Abweichend zu Beispiel 1 wurde jedoch das Methanol und der Acetaldehyd durch 220,0 g Isopropanol ersetzt. In sämtlichen Verfahrensschritten lagen die Vinylpolymere ausschließlich in fließfähigen Formen mit Viskositäten von ≤ 1.000.000 Pa·s vor (bestimmt mit dem Bohlin Rheometer CVO 120 HR bei der jeweiligen Temperatur des jeweiligen Verfahrensschrittes). Es wurde eine styrolische Lösung mit einem Feststoffgehalt von 40 Gew.-% an Vinylpolymer und einer Viskosität von 2.900 mPa·s erhalten (Bestimmung nach Brookfield bei 20 UpM und 23°C). Die Lösung wies einen Restgehalt an Isopropanol von 6.800 ppm auf und das Vinylpolymer zeigte eine Tg von -1°C.

### Beispiel 3:

Analog der Vorgehensweise von Beispiel 1 wurde eine Vinylpolymer hergestellt, welches aus 60 Gew.-% Vinylacetat und 40 Gew.-% Butylacrylat bestand.

Man erhitzte nach der Nachpolymerisation (2 Stunden bei 80°C) auf 130°C und destillierte unter einem Vakuum von 10 mbar die flüchtigen Bestandteile innerhalb von weiteren 2 h ab. Anschließend wurde die Polymerschmelze durch protionsweise Zugabe von insgesamt 200 g Methanol schrittweise gelöst und dabei die Innentemperatur auf 50°C abgesenkt. In sämtlichen Verfahrensschritten lagen die Vinylpolymere ausschließlich in fließfähigen Formen mit Viskositäten von ≤ 1.000.000 Pa·s vor (bestimmt mit dem Bohlin Rheometer CVO 120 HR bei der jeweiligen Temperatur des jeweiligen Verfahrensschrittes). Es wurde wieder, analog Beispiel 1, eine styrolische Lösung mit einem Feststoffgehalt von 40 Gew.-% an Vinylpolymer hergestellt. Sie hatte eine Viskosität von 5.200 mPa·s (Bestimmung nach Brookfield bei 20 UpM und 23°C) und einen Restgehalt an Methanol von 3.420 ppm. Das Vinylpolymer hatte eine Tg von -9°C.

### Beispiel 4:

Analog der Vorgehensweise von Beispiel 3 wurde ein Vinylpolymer hergestellt, welches aus 59 Gew.-% Vinylacetat, 40 Gew.-% Butylacrylat und 1 Gew.-% Crotonsäure bestand. In sämtlichen Verfahrensschritten lagen die Vinylpolymere ausschließlich in fließfähigen Formen mit Viskositäten von ≤ 1.000.000 Pa·s vor (bestimmt mit dem Bohlin Rheometer CVO 120 HR bei der jeweiligen Temperatur des jeweiligen Verfahrensschrittes). Die so erhaltene styrolische Lösung mit einem Feststoffgehalt von 40 Gew.-% an Vinylpolymer wies eine Viskosität von 4.700 mPa·s (Bestimmung nach Brookfield bei 20 UpM und 23°C) und einen Restgehalt an Methanol von 3.420 ppm. Das Vinylpolymer hatte eine Tg von -8°C.

### Beispiel 5:

Analog der Vorgehensweise von Beispiel 3 wurde ein Vinylpolymer hergestellt, welches aus 59 Gew.-% Vinylacetat, 40 Gew.-% Vinyllaurat und 1 Gew.-% Crotonsäure bestand. In sämtlichen Verfahrensschritten lagen die Vinylpolymere ausschließlich in fließfähigen Formen mit Viskositäten von ≤ 1.000.000 Pa·s vor (bestimmt mit dem Bohlin Rheometer CVO 120 HR bei der jeweiligen Temperatur des jeweiligen Verfahrensschrittes). Die styrolische Lösung mit einem Feststoffgehalt von 40 Gew.-% an Vinylpolymer wies eine Viskosität von 4.900 mPa·s (Bestimmung nach Brookfield bei 20 UpM und 23°C) und einen Restgehalt an Methanol von 3.840 ppm. Das Polymer hatte eine Tg von +1°C.

### Beispiel 6:

Analog der Vorgehensweise von Beispiel 3 wurde ein Vinylpolymer hergestellt, welches aus 80 Gew.-% Vinylacetat, 20 Gew.-% Vinyllaurat bestand. In sämtlichen Verfahrensschritten lagen die Vinylpolymere ausschließlich in fließfähigen Formen mit Viskositäten von ≤ 1.000.000 Pa·s vor (bestimmt mit dem Bohlin Rheometer CVO 120 HR bei der jeweiligen Temperatur des jeweiligen Verfahrensschrittes). Die styrolische Lösung mit einem Feststoffgehalt von 40 Gew.-% an Vinylpolymer wies eine Viskosität von 7.300 mPa·s (Bestimmung nach Brookfield bei 20 UpM und 23°C) und einen Restgehalt an Methanol von 5.320 ppm. Das Vinylpolymer hatte eine Tg von +20°C.

### Beispiel 7:

Analog der Vorgehensweise von Beispiel 3 wurde ein Vinylpolymer hergestellt, welches aus 40 Gew.-% Vinylacetat, 60 Gew.-% Vinyllaurat bestand. In sämtlichen Verfahrensschritten lagen die Vinylpolymere ausschließlich in fließfähigen Formen mit Viskositäten von ≤ 1.000.000 Pa·s vor (bestimmt mit dem Bohlin Rheometer CVO 120 HR bei der jeweiligen Temperatur des jeweiligen Verfahrensschrittes). Die styrolische Lösung mit einem Feststoffgehalt von 40 Gew.-% an Vinylpolymer wies eine Viskosität von 3.280 mPa·s (Bestimmung nach Brookfield bei 20 UpM und 23°C) und einen Restgehalt an Methanol von 2.430 ppm. Das Vinylpolymer hatte eine Tg von -21°C.

### Verwendung der Lösungen von Vinylpolymeren in reaktiven Monomeren als LPA:

Die SMC-Formulierungen aus Tabelle 1 wurden wie folgt zu einem SMC-Formteil verarbeitet:
Die Bestandteile der jeweiligen SMC-Formulierung, mit Ausnahme des Magnesiumoxids, wurden in einem Dissolver zu einer Paste angerührt. Nach 5 Minuten wurde bei reduzierter Drehzahl das Magnesiumoxid eingerührt. Die Paste wurde mit einem 1,5 mm Rakel auf einen Polyamidfilm aufgetragen. Die Glasfaser wurde auf die pastöse Schicht aufgestreut. In gleicher Weise wurde ein zweiter Polyamidfilm mit Paste beschichtet und anschließend über die Glasfaserschicht geklappt. Das so hergestellte Sandwich wurde mit einem Nudelholz verdichtet. Das Produkt wurde 3 Tage bei 20°C und 50 % Raumfeuchte gelagert. Danach wurden die Polyamidfilme entfernt und die lederartige Masse bei 160°C in einer gängigen SMC-Presse zu einem Bauteil gepresst.

**Tabelle 1: SMC-Formulierungen:**

| Bestandteile | Bsp. 8 (Gew.-T) | V.Bsp. 9 (Gew.-T) |
|---|---|---|
| o-Phthalic-UP-Harz (65 Gew.-% in Styrol) | 65,5 | 65,5 |
| Carboxyfunktionelles PolyvinylaCetat^{a)} (40 Gew.-% in Styrol) | 0,0 | 30,0 |
| Vinylpolymer aus Beispiel 5 (40 Gew.-% in Styrol) | 30,0 | 0,0 |
| Styrol | 4,5 | 4,5 |
| t-Butylperoxybenzoat | 1,5 | 1,5 |
| Zinkstearat | 4,0 | 4,0 |
| Rußpigment | 10,0 | 10,0 |
| Calciumcarbonat | 200,0 | 200,0 |
| Benzoquinon | 0,3 | 0,3 |
| Prozess-Additiv (wetting agent, degasing) | 7,9 | 7,9 |
| | | |
| Magnesiumoxid | 2,5 | 2,5 |
| | | |
| Glasfaser | 90,0 | 90,0 |

| | | |
|---|---|---|
| a) Vinylacetat-Crotonsäure-Copolymer mit 1 Gew.-% Crotonsäure; die styrolische Lösung wurde durch Lösen von granulärem Copolymer in Styrol hergestellt. | | |

Der Schrumpf wurde nach dem Erkalten der Presse ermittelt und die Volumenänderung in Prozent bestimmt. Minuswerte zeigen an, dass das Bauteil größer als die ursprüngliche Form war.

**Tabelle 2:**

| | x | | | y | | |
|---|---|---|---|---|---|---|
| | Abmaß | Länge | Schrumpf | Abmaß | Länge | Schrumpf |
| | [mm] | [mm] | [‰] | [mm] | [mm] | [‰] |
| Bsp. 8 | 0,386 | 457,381 | -0,40 | 0,448 | 457,443 | -0,53 |
| V.Bsp. 9 | 0,361 | 457,356 | -0,34 | 0,412 | 457,407 | -0,45 |

Wie aus Tabelle 2 ersichtlich wirken die erfindungsgemäß hergestellten Lösungen von Vinylpolymeren bei Einsatz als LPA einem Volumenschrumpf in vergleichbarer Weise entgegen wie herkömmliche, carboxylfunktionelle Polyvinylacetat-Lösungen. Beide bewirken in der Formulierung eine Expansion des Bauteils bei dessen Herstellung.

Der Einsatz der erfindungsgemäßen hergestellten Lösungen bietet dem Anwender aber den Vorteil, dass er die Vinylpolymere nicht erst aufwändig lösen muss, sondern gleich gebrauchsfertig beziehen und einsetzen kann. Besonders vorteilhaft wirkt sich der Einsatz der erfindungsgemäß hergestellten Lösungen aus, wenn Vinylpolymere mit niedrigen Glasübergangstemperatur, wie das in Beispiel 8 eingesetzte Vinylpolymer (Tg = 1°C), als LPA verwendet werden. Denn gerade derartige Vinylpolymere lassen nach herkömmlichen Verfahren, wie in der Einleitung beschrieben, nur mit großen Schwierigkeiten in Lösungen in reaktiven Monomeren überführen. Diese Probleme treten bei Einsatz der erfindungsgemäß hergestellten Lösungen von Vinylpolymeren in reaktiven Monomeren nicht auf.

## Patentansprüche

1. Verfahren zur Herstellung von Lösungen von Vinylpolymeren in reaktiven Monomeren durch
a) radikalisch initiierte Polymerisation nach Masse-, Suspensions- oder Lösungspolymerisationsverfahren von einem oder mehreren ethylenisch ungesättigten Monomeren ausgewählt aus der Gruppe umfassend Vinylester, Acrylsäureester und Methacrylsäureester, und gegebenenfalls einem oder mehreren weiteren ethylenisch ungesättigten Monomeren, und anschließend
b) gegebenenfalls Abdestillieren von flüchtigen Bestandteilen und
c) gegebenenfalls Zugabe von einem oder mehreren inerten Lösemitteln,
d) Mischen mit einem oder mehreren reaktiven Monomeren, und
e) Abdestillieren der inerten Lösemittel, **dadurch gekennzeichnet, dass**
die Vinylpolymere in sämtlichen Verfahrensschritten, d.h. vor und während des Mischens mit den reaktiven Monomeren in einer fließfähigen Form vorliegen.

2. Verfahren nach Anspruch 1, **dadurch gekennzeichnet, dass** die Vinylpolymere in den Schritten a) bis e) in fließfähigen Formen mit Viskositäten von ≤ 10.000.000 Pa·s vorliegen (Bestimmung mit dem Bohlin Rheometer CVO 120 HR bei der jeweiligen Temperatur im jeweiligen Verfahrensschritt).

3. Verfahren nach Anspruch 1 oder 2, **dadurch gekennzeichnet, dass** ein oder mehrere reaktive Monomere ausgewählt werden aus der Gruppe umfassend Vinylester, Acrylsäureester und Methacrylsäureester, Vinylaromaten, Olefine, Diene und Vinylhalogenide.

4. Verfahren nach Anspruch 1 oder 2, **dadurch gekennzeichnet, dass** als reaktive Monomere ein oder mehrere ethylenisch ungesättigte Monomere mit funktionellen Gruppen eingesetzt werden ausgewählt aus der Gruppe umfassend Epoxygruppen, Carbonsäuregruppen, Sulfonsäuregruppen und Phosponsäuregruppen.

5. Verfahren nach Anspruch 1 bis 4, **dadurch gekennzeichnet, dass** die Vinylpolymere Glasübergangstemperaturen Tg von ≤ 35 °C aufweisen.

6. Verfahren nach Anspruch 1 bis 5, **dadurch gekennzeichnet, dass** die Vinylpolymere durch Erwärmen und/oder durch Zusatz von einem inerten Lösemittel oder einem Gemisch von inerten Lösemitteln in eine fließfähige Form gebracht werden.

7. Verfahren nach Anspruch 1 bis 6, **dadurch gekennzeichnet, dass** inerte Lösemittel oder Komponenten für Gemische von inerten Lösemitteln ausgewählt werden aus der Gruppe umfassend Alkohole, Ketone, Ester, Ether, aliphatische oder aromatische Kohlenwasserstoffe.

8. Verfahren nach Anspruch 1 bis 7, **dadurch gekennzeichnet, dass** das Mischen der Vinylpolymere mit den reaktiven Monomeren in einem Temperaturbereich (Mischungstemperaturbereich) von 20 bis 140°C durchgeführt wird.

9. Verfahren nach Anspruch 1 bis 8, **dadurch gekennzeichnet, dass** Lösungen von Vinylpolymeren in reaktiven Monomeren ≤ 20 Gew.-% an inerten Lösemitteln enthalten, bezogen auf das Gesamtgewicht der jeweiligen Lösung.

10. Verfahren nach Anspruch 1 bis 9, **dadurch gekennzeichnet, dass** die Lösungen von Vinylpolymeren in reaktiven Monomeren 10 bis 90 Gew.-% an Vinylpolymeren enthalten, bezogen auf das Gesamtgewicht der jeweiligen Lösung.

11. Verfahren nach Anspruch 1 bis 10, **dadurch gekennzeichnet, dass** in einem oder mehreren Verfahrensschritten nach Abschluss der Polymerisation a) ein oder mehrere Polymerisations-Inhibitoren zugegeben werden.

## Claims

1. Process for producing solutions of vinyl polymers in reactive monomers via
a) free-radical-initiated polymerization by bulk-, suspension- or solution-polymerization processes, from one or more ethylenically unsaturated monomers selected from the group consisting of vinyl esters, acrylic esters, and methacrylic esters, and, if appropriate, from one or more other ethylenically unsaturated monomers, and then
b) if appropriate, removing volatile constituents by distillation, and
c) if appropriate, addition of one or more inert solvents,
d) mixing with one or more reactive monomers,
and
e) removing the inert solvents by distillation, **characterized in that**
in all of the steps of the process, i.e. prior to and during the mixing with the reactive monomers, the vinyl polymers are present in a flowable form.

2. Process according to Claim 1, **characterized in that** the vinyl polymers are present in steps a) to e) in flowable forms with viscosities of ≤ 10 000 000 Pa·s (determined by the Bohlin CVO 120 HR rheometer at the respective temperature in the respective step of the process).

3. Process according to Claim 1 or 2, **characterized in that** one or more reactive monomers is/are selected from the group consisting of vinyl esters, acrylic esters, and methacrylic esters, vinyl aromatics, olefins, dienes, and vinyl halides.

4. Process according to Claim 1 or 2, **characterized in that** the reactive monomers used comprise one or more ethylenically unsaturated monomers having functional groups selected from the group consisting of epoxy groups, carboxylic acid groups, sulfonic acid groups, and phosphonic acid groups.

5. Process according to any of Claims 1 to 4, **characterized in that** the glass transition temperatures Tg of the vinyl polymers are ≤ 35°C.

6. Process according to any of Claims 1 to 5, **characterized in that** the vinyl polymers are converted to a flowable form via heating and/or via addition of an inert solvent or of a mixture of inert solvents.

7. Process according to any of Claims 1 to 6, **characterized in that** inert solvents or components for mixtures of inert solvents are selected from the group consisting of alcohols, ketones, esters, ethers, and aliphatic or aromatic hydrocarbons.

8. Process according to any of Claims 1 to 7, **characterized in that** the mixing of the vinyl polymers with the reactive monomers is carried out in the temperature range (mixing temperature range) from 20 to 140°C.

9. Process according to any of Claims 1 to 8, **characterized in that** solutions of vinyl polymers in reactive monomers comprise ≤ 20% by weight of inert solvents, based on the total weight of the respective solution.

10. Process according to any of Claims 1 to 9, **characterized in that** the solutions of vinyl polymers in reactive monomers comprise from 10 to 90% by weight of vinyl polymers, based on the total weight of the respective solution.

11. Process according to any of Claims 1 to 10, **characterized in that** in one or more steps of the process after conclusion of the polymerization a) one or more polymerization inhibitors is/are added.

## Revendications

1. Procédé pour la préparation de solutions de polymères de vinyle dans des monomères réactifs par
a) polymérisation initiée par voie radicalaire selon un procédé de polymérisation en masse, en suspension ou en solution d'un ou de plusieurs monomères éthyléniquement insaturés, choisis dans le groupe comprenant les esters de vinyle, les esters de l'acide acrylique et les esters de l'acide méthacrylique et le cas échéant d'un ou de plusieurs autres monomères éthyléniquement insaturés, puis
b) le cas échéant élimination par distillation de constituants volatils et
c) le cas échéant ajout d'un ou plusieurs solvants inertes,
d) mélange avec un ou plusieurs monomères réactifs, et
e) élimination par distillation des solvants inertes, **caractérisé en ce que** les polymères de vinyle se trouvent sous une forme apte à l'écoulement pendant l'ensemble des étapes de procédé, c'est-à-dire avant et pendant le mélange avec les monomères réactifs.

2. Procédé selon la revendication 1, **caractérisé en ce que** les polymères de vinyle se trouvent, dans les étapes a) à e), sous des formes aptes à l'écoulement présentant des viscosités ≤ 10 000 000 Pa.s (détermination avec le rhéomètre Bohlin CVO 120 HR à la température à chaque fois en vigueur dans l'étape de procédé respective).

3. Procédé selon la revendication 1 ou 2, **caractérisé en ce qu'**un ou plusieurs monomères réactifs sont choisis dans le groupe comprenant les esters de vinyle, les esters de l'acide acrylique et les esters de l'acide méthacrylique, les aromatiques de vinyle, les oléfines, les diènes et les halogénures de vinyle.

4. Procédé selon la revendication 1 ou 2, **caractérisé en ce qu'**on utilise comme monomères réactifs un ou plusieurs monomères éthyléniquement insaturés présentant des groupes fonctionnels, choisis dans le groupe comprenant les groupes époxy, acide carboxylique, acide sulfonique et acide phosphonique.

5. Procédé selon les revendications 1 à 4, **caractérisé en ce que** les polymères de vinyle présentent des températures de transition vitreuse Tg ≤ 35°C.

6. Procédé selon les revendications 1 à 5, **caractérisé en ce que** les polymères de vinyle sont amenés dans une forme apte à l'écoulement par chauffage et/ou par addition d'un solvant inerte ou d'un mélange de solvants inertes.

7. Procédé selon les revendications 1 à 6, **caractérisé en ce que** les solvants inertes ou les composants pour des mélanges de solvants inertes sont choisis dans le groupe comprenant les alcools, les cétones, les esters, les éthers, les hydrocarbures aliphatiques ou aromatiques.

8. Procédé selon les revendications 1 à 7, **caractérisé en ce que** le mélange des polymères de vinyle avec les monomères réactifs est réalisé dans une plage de température (plage de température de mélange) de 20 à 140°C.

9. Procédé selon les revendications 1 à 8, **caractérisé en ce que** les solutions de polymères de vinyle dans des monomères réactifs contienent ≤ 20% en poids de solvants inertes, par rapport au poids total de la solution respective.

10. Procédé selon les revendications 1 à 9, **caractérisé en ce que** les solutions de polymères de vinyle dans des monomères réactifs contiennent 10 à 90% en poids de polymères de vinyle, par rapport au poids total de la solution respective.

11. Procédé selon les revendications 1 à 10, **caractérisé en ce qu'**on ajoute dans une ou plusieurs étapes de procédé, après la fin de la polymérisation a), un ou plusieurs inhibiteurs de polymérisation.
